# FASCICULE DE BREVET EUROPEEN

(11) **EP 2 473 898 B1**
(45) Date de publication et mention de la délivrance du brevet: **05.05.2021**
(21) Numéro de dépôt: 09740737.3
(22) Date de dépôt: 02.09.2009
(51) Int. Cl.: G06F 3/023, G09F 13/18, H01H 9/18, H01H 13/83

(54) **DISPOSITIF ET PROCÉDÉ D'AFFICHAGE ET UN CLAVIER LES METTANT EN OEUVRE**
ANZEIGEVORRICHTUNG UND VERFAHREN SOWIE TASTATUR DAMIT
DISPLAY DEVICE AND METHOD, AND KEYBOARD IMPLEMENTING SAME

(43) Date de publication de la demande: 11.07.2012
(73) Titulaire: Luo, David, 69002 Lyon (FR)
(72) Inventeur: Luo, David, 69002 Lyon (FR)
(74) Mandataire: Hautier IP
(86) Numéro de dépôt international: PCT/IB2009/006716
(87) Numéro de publication internationale: WO 2011/027187

(56) Documents cités:
- WO-A2-2005/078563
- FR-A1- 2 920 859
- FR-A1- 2 928 223
- US-A1- 2009 161 388

## Description

La présente invention vise un dispositif et un procédé d'affichage et un clavier les mettant en œuvre. Elle s'applique, en particulier, aux systèmes possédant plusieurs modes de fonctionnement électroniques, par exemple téléphones, télécommandes, radios, systèmes de positionnement, systèmes de navigation, consoles de jeu, terminaux d'accès à Internet, panneaux de commande, commandes de volant, habitacles de voiture, cockpits d'avion, ainsi qu'aux afficheurs publics, comme par exemple des panneaux publicitaires ou des panneaux de signalisation routière.

Le clavier de ces appareils électroniques est très souvent dédié à plusieurs fonctions, comme par exemple, dans le cas d'un téléphone mobile, à la saisie de lettres, à la saie de chiffres et à la commande de fonctions mp3. Cependant, il n'est pas toujours possible de présenter, sur chaque touche du clavier, tous les symboles auxquels la touche de clavier devrait correspondre. Uniquement une partie des fonctions est représentée sur la touche par des symboles. Ceci rend l'utilisation du téléphone difficile.

Dans les panneaux publicitaires, les panneaux d'affichage public ou de signalisation routière, lorsque l'on veut afficher plusieurs messages, il est nécessaire soit de les juxtaposer, soit de faire défiler ces messages, par exemple en motorisant un moyen de déplacement des supports des messages. Ces systèmes sont coûteux, occupent un espace important ou affichent des messages de petite taille, nuisible à leur reconnaissance.

Les brevets WO2005078563 et WO2006085200 présentent un dispositif, procédé d'affichage et un clavier permettant de proposer une solution remédiant à ces inconvénients.

La présente invention propose des solutions alternatives pour remédier à ces inconvénients.

A cet effet, la présente invention vise un dispositif d'affichage, caractérisé en ce qu'il comporte :
- au moins un afficheur « latéral», placé après la surface d'affichage du dispositif, apte à afficher un message, et qui comporte :
- un guide d'onde composé d'un substrat transparent ou translucide, portant un message à afficher composé d'au moins une zone « message » placée sur une des surfaces du substrat,
- au moins une source de lumière adaptée à éclairer latéralement le guide d'onde,
- au moins un filtre «négatif», couvrant au moins partiellement les zones « message » du guide d'onde, placé après le guide d'onde, de telle manière que les rayons traversant cet afficheur dit « latéral » soient uniformément atténués dans les zones « message » et les zones complémentaires aux zones « message » et
- un moyen de modulation d'au moins une caractéristique physique d'une source de lumière d'un afficheur, de telle manière que, lorsque la source de lumière d'un afficheur est allumée, les rayons lumineux émis se propagent à l'intérieur du substrat correspondant jusqu'aux zones « message ». Ces dites zones réfléchissent une partie et/ou transmettent une autre partie de ces rayons lumineux, en dehors du substrat correspondant. Ces dits rayons traversent ensuite tous les autres afficheurs se trouvant sur le chemin optique vers la surface d'affichage du dispositif, rendant le message porté par le guide d'onde visible sur la surface d'affichage du dispositif.

Grâce à ces dispositions, pour faire apparaître le message, par exemple un symbole sur une touche ou un message sur un panneau d'affichage, on module l'allumage de la source de lumière correspondant au guide d'onde portant ledit symbole ou ledit message. En sélectionnant l'allumage de la source de lumière émise, on rend visible l'un des symboles ou l'un des messages porté par le guide d'onde correspondant.

On observe que le dispositif peut se positionner avant un tiers afficheur. Lorsque le dispositif est éteint, les rayons lumineux portant un message émis par le dit tiers afficheur traversent le dispositif et le dit message apparaît sur la surface d'affichage du dispositif.

Grâce à ces dispositions, nous pouvons empiler au moins deux dispositifs d'affichage l'un après l'autre, les messages affichés par des dispositifs apparaissent alors sur la surface d'affichage du premier dispositif.

On observe que même dans le cas des afficheurs superposés, les messages peuvent apparaître alternativement sur deux parties différentes de la surface d'affichage.

Selon des caractéristiques particulières, le dispositif d'affichage comporte au moins un afficheur « rétro », placé en superposition après un afficheur « latéral », qui comporte:
- une source de lumière adaptée à éclairer, par rétro-éclairage, une surface de l'afficheur «rétro », dont au moins une caractéristique physique est modulable par le moyen de modulation du dispositif,
- dans la surface du dit afficheur « rétro », au moins un filtre correspondant à une valeur de caractéristique physique modulée par le moyen de modulation et à un message à afficher sur la surface d'affichage du dispositif.

Grâce à ces dispositions, le dispositif peut afficher des messages supplémentaires, par exemple un symbole sur une touche ou un message sur un panneau d'affichage. On module la caractéristique de la source de lumière de l'afficheur « rétro » pour que cette caractéristique corresponde au filtre représentant ledit symbole ou ledit message. En sélectionnant la modulation de lumière émise, on rend visible l'un des symboles ou l'un des messages représentés par l'un des filtres.

Selon des caractéristiques particulières, le moyen de modulation est adapté à faire varier la bande spectrale lumineuse qui parvient aux dits filtres des afficheurs « rétro » et les dits filtres présentent des bandes spectrales de transparences différentes.

Grâce à ces dispositions, lorsque le moyen de modulation fait varier la bande spectrale des rayons lumineux qui atteignent les filtres, ceux-ci prennent des apparences visuelles différentes, ce qui a pour effet de faire apparaître des symboles ou messages différents sur la surface d'affichage, par exemple sur la touche de clavier à laquelle ces filtres sont associés ou sur le panneau d'affichage comportant ces filtres.

Selon des caractéristiques particulières, la source de lumière comporte une diode électroluminescente dont la bande spectrale d'émission varie en fonction des caractéristiques électriques du signal d'alimentation qui lui est appliqué et le moyen de modulation est adapté à faire varier lesdites caractéristiques électriques.

Grâce à ces dispositions, la construction de la source de lumière, du système optique et du moyen de modulation est simplifiée.

Selon des caractéristiques particulières, le dispositif tel que succinctement exposé ci-dessus, comporte au moins un réflecteur, placé après les afficheurs.

Grâce à ces dispositions, le dispositif optimise le rendement en renvoyant dans le guide d'onde tous les rayons échappés du guide d'onde, en dehors des zones d'éclairage.

Selon des caractéristiques particulières, les afficheurs « latéral » ou « rétro » comportent au moins un filtre « masque » à fonction transmissive, placée sur la surface du guide d'onde, superposée sur les zones « messages », couvrant partiellement ou totalement les zones « message ».

Grâce à ces dispositions, le dispositif peut rendre une partie ou la totalité des messages portés sur les guides d'ondes moins visibles voir complètement invisibles, en fonction de la fonction transmissive du filtre.

Selon des caractéristiques particulières, le filtre « négatif » d'un afficheur « latéral » se trouve sur le substrat de l'afficheur situé directement après ledit afficheur « latéral ».

Grâce à ces dispositions, le nombre de composants est réduit et les étapes de fabrication du dispositif sont optimisées.

Selon des caractéristiques particulières, les zones « message », les filtres « négatifs » et les filtres « masque » du dispositif sont constitués d'au moins une encre déposée sur au moins un substrat.

Grâce à ces dispositions, ces zones « message » et les filtres du dispositif peuvent être fabriqués facilement par des moyens d'impression.

Selon des caractéristiques particulières, les zones « message », les filtres « négatifs » et les filtres « masque » sont réalisés par des formes géographiques sur le substrat.

Grâce à ces dispositions, d'autres méthodes de fabrication peuvent être utilisées, par exemple des gravures lasers.

La présente invention vise aussi, selon un deuxième aspect, un dispositif d'affichage qui comporte au moins une touche comportant :
- au moins un afficheur « latéral », apte à afficher un message sur ladite touche et à transmettre un autre message issu d'un afficheur situé après ledit afficheur « latéral »,
- au moins un moyen de modulation d'une caractéristique physique d'au moins une source de lumière des afficheurs, de telle manière qu'à chaque caractéristique physique modulée, le message affiché sur la touche change,
- au moins un contacteur adapté à fournir un signal représentatif de l'interaction entre un utilisateur et au moins une partie de la surface d'affichage,

Grâce à ces dispositions, pour faire apparaître sur la touche un symbole ou un message, on module la source de lumière de l'afficheur correspondant. Le dispositif peut ainsi constituer un bouton électrique, un bouton-poussoir, un contacteur ou un clavier, par exemple.

Selon des caractéristiques particulières, le dispositif tel que succinctement exposé ci-dessus, comporte un moyen de réception de signaux issus d'au moins un contacteur d'une touche, représentatifs de l'interaction entre un utilisateur et au moins une partie de la surface d'affichage, le moyen de réception étant adapté à affecter aux dits signaux le message affiché sur ladite touche.

Grâce à ces dispositions, le traitement d'une saisie de symbole sur une touche du clavier tient compte du symbole qui était effectivement affiché sur cette touche.

Selon un troisième aspect, la présente invention vise un procédé d'affichage qui comporte :
- une étape d'allumage d'une source de lumière éclairant latéralement un substrat comportant au moins une zone « message » sur une des surfaces du substrat d'au moins un afficheur « latéral »,
- une étape de formation d'au moins un message sur la surface d'affichage par des rayons réfléchis ou transmis des zones « message » portées par le substrat du dit afficheur « latéral »,
- une étape de modulation d'au moins une caractéristique physique d'une des sources de lumière, de telle manière que la variation d'au moins une dite caractéristique physique modulée par le moyen de modulation fasse varier le message sur la surface d'affichage.

Selon un quatrième aspect, la présente invention vise un procédé d'affichage qui comporte :
- une étape d'allumage d'une source de lumière éclairant latéralement un substrat comportant au moins une zone « message » sur une des surfaces du substrat d'au moins un afficheur « latéral » ou d'une source de lumière rétro éclairant au moins un filtre portant un message d'un afficheur « rétro »,

- une étape de formation d'au moins un message sur la surface d'affichage par des rayons réfléchis ou transmis des dites zones « message » d'un substrat d'un dit afficheur « latéral » ou par des rayons transmis des messages portés par au moins un filtre du dit afficheur « rétro »,
- une étape de modulation d'au moins une caractéristique physique d'une des sources de lumière, de telle manière que la variation d'au moins une dite caractéristique physique modulée par le moyen de modulation fasse varier le message sur la surface d'affichage.

Les avantages, buts et caractéristiques de ces procédés d'affichage étant similaires à ceux du dispositif d'affichage objet du premier aspect tel que succinctement exposés ci-dessus, ils ne sont pas rappelés ici.

La présente invention vise également un dispositif électronique possédant au moins une des fonctions suivantes : un assistant numérique personnel, un organiseur, un téléphone, une console de jeux, un ordinateur portable, un terminal d'accès à Internet, un distributeur automatique de billets, un tableau de bord, une montre, une télécommande, un baladeur, un système de positionnement, ,un récepteur de signaux audiovisuels, un équipement électronique, bureautique ou de loisir, un télécopieur, un photocopieur, un scanneur, un lecteur de supports enregistrés, une installation de domotique, un appareil électroménager, un équipement médical, un appareil de mesure, un automate d'analyse, un équipement automobile, un panneau d'indication, un interrupteur, un dispositif de jeux, un élément de décoration, une lampe, un bouton électrique, un panneau d'affichage, un dispositif électronique comportant un dispositif d'éclairage tel que succinctement exposé ci-dessus.

Toutes les caractéristiques essentielles, préférentielles ou particulières des différents aspects de la présente invention peuvent être combinées pour former d'autres modes de réalisation de la présente invention présentant des combinaisons des avantages exposés ci-dessus.

D'autres avantages, buts et caractéristiques de la présente invention ressortiront de la description qui va suivre, faite dans un but explicatif et nullement limitatif, en regard des dessins annexés dans lesquels :
- la figure 1 représente, schématiquement, en coupe, un premier mode de réalisation d'un dispositif d'affichage de la présente invention ;
- la figure 2 représente, schématiquement, en vue de dessus, le dispositif d'affichage illustré en figure 1 ;
- la figure 3 représente, schématiquement, des courbes de réflexion des zones « message » et des spectres d'émission des sources de lumière du dispositif d'affichage illustré en figures 1 et 2;
- la figure 4 représente, schématiquement, des courbes de transmission des zones « message » et des filtres « négatifs» du dispositif d'affichage illustré en figures 1 et 2;
- la figure 5 représente, schématiquement, une variante du premier mode de réalisation illustré en 1 à 2;
- la figure 6 représente, schématiquement, une variante du premier mode de réalisation illustré en 1 à 2;
- la figure 7 représente, schématiquement, une variante du premier mode de réalisation illustré en 1 à 2;
- la figure 8 représente, schématiquement, en coupe, un deuxième mode de réalisation d'un dispositif d'éclairage de la présente invention ;
- la figure 9 représente, schématiquement, en vue de dessus, le dispositif d'éclairage illustré en figure 8 ;
- la figure 10 représente des courbes de transparence des filtres et des spectres d'émission de la source de lumière de l'afficheur « rétro » dans le dispositif d'éclairage illustré en figures 8 et 9 ;
- la figure 11 représente, schématiquement, en coupe, une variante du deuxième mode de réalisation illustré en figures 8 à 10;
- la figure 12 représente, schématiquement, en coupe, un troisième mode de réalisation d'un clavier intégrant un dispositif d'affichage de la présente invention ;
- la figure 13 représente, schématiquement, en vue de dessus, le clavier illustré en figure 12.

Dans toute la description, on utilise « substrat » pour désigner un matériel sous toutes les formes, transparent ou translucide, rigide ou flexible, ayant un indice de réfraction supérieur à celui du support extérieur frontalier, par exemple l'air, permettant d'emprisonner la lumière injectée sur le coté à l'intérieur du matériel, grâce à la réflexion, voir grâce à la réflexion totale des rayons arrivés sur les parois du matériel avec un angle d'incidence inférieur à l'angle critique. Plusieurs matériaux peuvent être utilisés pour la réalisation du substrat comme, par exemple du polycarbonate, polyméthacrylate de méthyle (PMMA), polystyrène, polyéthylène téréphtalate, polyester, transparent silicone.

On appelle la face et le dos du substrat les surfaces du substrat qui se trouvent respectivement le plus proche et le plus éloignée de la surface d'affichage du dispositif.

Dans toute la description, on décrit des sources de lumière comportant une ou plusieurs diodes électroluminescentes. Cependant, la présente invention ne se limite pas à ce type de transducteur électro-optique, mais couvre tous les types de sources de lumière, dont par exemple des diodes électroluminescentes organiques (ou « oled »), des diodes lasers, des ampoules à incandescence ou des ampoules dites « fluo ».

Dans toute la description, on utilise « message » ou « symbole » pour désigner une forme visible intelligible. Par exemple, des lettres, des chiffres, des caractères, des mots, des photos, des graphiques, des logos, des icônes ou d'autres graphismes sont, au sens de la présente invention, des messages ou des symboles.

On appelle zone « message » une surface qui retourne, du côté d'où provient la lumière, une partie des rayons en fonction de la fonction de réflexion et qui laisse traverser une partie des rayons en fonction de la fonction de transmission.

On appelle filtre « négatif » une surface transmissive qui contient au moins une zone transparente ou à faible capacité de transmission, couvrant partiellement ou totalement les zones « message », la différence de la transmission à l'extérieur et à l'intérieur de cette zone étant sensiblement identique à la transmission des zones « message » correspondante.

On appelle filtre « masque » un filtre transmissif couvrant partiellement ou totalement les zones « message », afin de rendre ces zones « message » couvertes moins visibles ou complètement invisibles sous la lumière ambiante lorsque aucune source n'est allumée.

La présente invention peut être appliquée à tous les panneaux ou systèmes d'affichage, d'information, d'indication, de signalisation ou publicitaire ; de plus, elle s'applique à toutes les touches et boutons, et à tous systèmes de commandes, de saisie ou de contrôle.

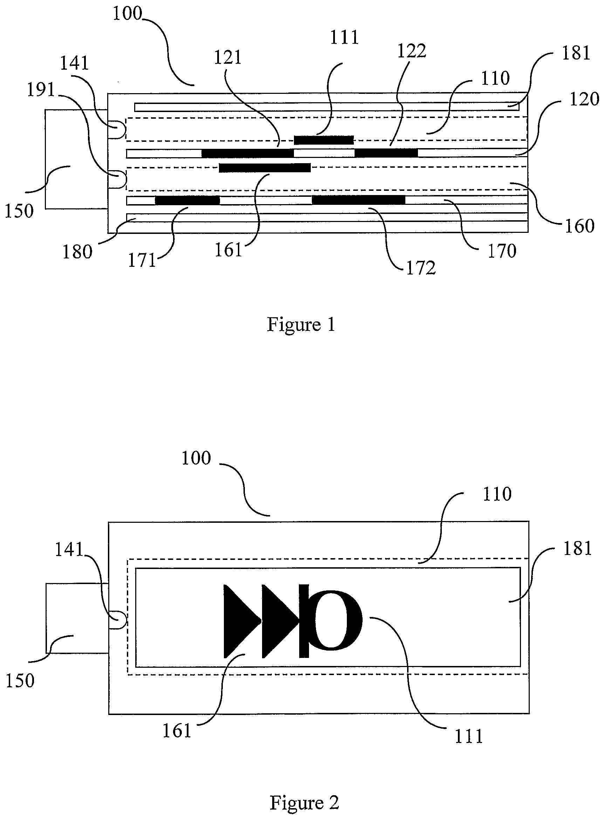

Dans le premier mode de réalisation, illustré par les figures 1 à 2, on utilise des dépôts d'encres blanches ou chromatiques pour former différentes zones « message » sur les faces du substrat et les filtres « négatifs ». Pour faire apparaître des messages, on module l'allumage de la source de lumière correspondante.

On observe, en figures 1 à 4, un dispositif d'affichage 100 comportant deux afficheurs « latéraux », composés de deux substrats transparents ou translucides 110 et 160, muni de deux zones « message » 111 et 161. Deux filtres « négatifs » 120 et 170 se trouvent respectivement après les substrats 110 et 160 et les zones « message » 111 et 161. Deux sources de lumière sont constituées de deux diodes électroluminescentes 141 et 191 commandées par un moyen de modulation 150. Un filtre « masque » 181 et un réflecteur 180 se trouvent respectivement avant le substrat 110 et après le filtre « négatif » 170.

Les substrats transparents 110 et 160 possèdent un indice supérieur à celui de l'air, de telle manière que la lumière injectée latéralement dans un substrat se propage à l'intérieur du même substrat.

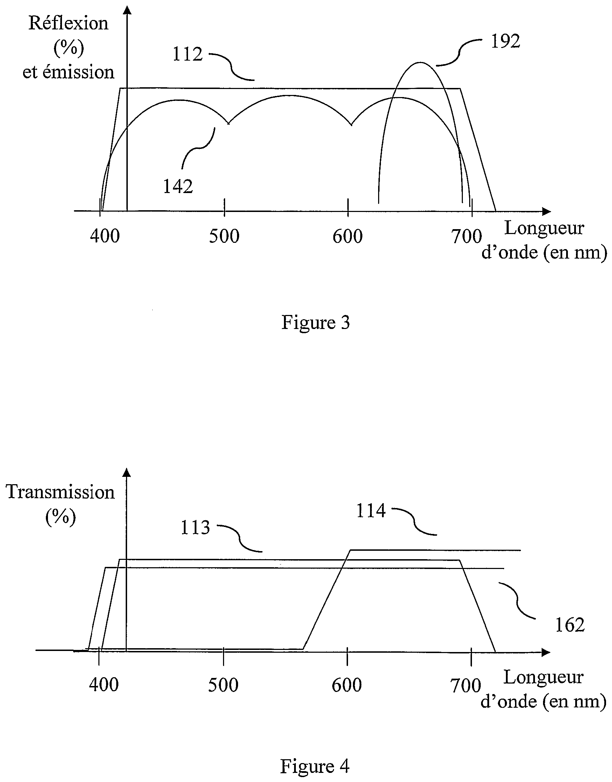

Les diodes électroluminescentes 141 et 191, sont placées respectivement sur les mêmes plans et à coté des substrats 110 et 160, et émettent respectivement dans des bandes spectrales larges et étroites, par exemple, la diode électroluminescente 141 émet des rayons lumineux blancs 142 dont les longueurs d'onde se trouvent entre 400 et 700 nanomètres et la diode électroluminescente 191 émet des rayons lumineux rouges 192 dont les longueurs d'onde se trouvent entre 600 et 700 nanomètres, tel que montré par la figure 3.

La zone « message » 111 se trouve sur le dos du substrat 110 et sur le chemin optique des rayons lumineux issus de la diode électroluminescente 141. La zone « message » 161 se trouve sur la face du substrat 160 sur le chemin optique des rayons lumineux issus de la diode électroluminescente 191. Les zones 111 et 161 sont formées de messages différents, par exemple « O » et « 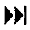 », la zone 111 possédant des courbes de réflexion 112 et des courbes de transmission 113, la zone 161 possédant des courbes de transmission 162, tel que montré par les figures 3 et 4. La zone « message » 111 reflète les rayons lumineux ayant des longueurs d'onde entre 400 et 700 nanomètres, émises par la diode électroluminescente 141. Inversement, la zone « message» 161 transmet des rayons de longueurs d'onde supérieures à 600 nanomètres, émis par la diode électroluminescente 191.

Les filtres « négatifs» 120 et 170 possèdent respectivement des courbes de transmission 113 et 162, portant respectivement des zones transparentes de la même forme que celles des zones « message » 111 et 161, par exemple « O » et « 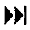 », et se trouvent respectivement après les substrats 110 et 160.

Le réflecteur 180, situé après le filtre « négatif» 170, renvoie vers le substrat 160 tous les rayons échappés du substrat 160 et du filtre « négatif » 170.

Un filtre « masque » 181, situé avant le substrat 110, atténue dans un premier temps la lumière ambiante et dans un deuxième temps les rayons réfléchis par des zones « messages » de la lumière ambiante résidue.

Lorsque le moyen de modulation 150 ne commande aucune diode électroluminescente, aucun message n'est éclairé et n'est donc visible sur la surface d'affichage.

Lorsque 150 commande l'allumage de la diode électroluminescente 141 et l'extinction de la diode électroluminescente 191, la diode envoie des rayons lumineux de longueurs d'onde entre 400 et 700 nanomètres dans le substrat 110 jusqu'à la zone « message » 111. La zone « message » 111 renvoie une partie des rayons en direction perpendiculaire et en dehors du substrat. Les rayons renvoyés forment un message sous une certaine forme, ici « O », en couleur, blanc, par exemple.

Lorsque 150 commande l'allumage de la diode électroluminescente 191 et l'extinction de la diode électroluminescente 141, la diode envoie des rayons lumineux de longueurs d'onde entre 600 et 700 nanomètres dans le substrat 110 jusqu'à la zone « message » 161. La zone « message » 161 renvoie une partie des rayons dans la direction perpendiculaire et en dehors du substrat. Les rayons renvoyés subissent une atténuation sensiblement uniforme en traversant le substrat 110 et le filtre « négatif» 120, et arrivent sur la surface d'affichage, en formant un message sous une certaine forme, ici « 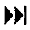 », en couleur, rouge, par exemple.

Ainsi, grâce à ces dispositions, par la modulation d'une caractéristique physique de la lumière émise par les sources de lumière, ici l'allumage ou l'extinction d'une des sources de lumière, on fait apparaître, sur la surface du dispositif d'éclairage 100, soit un message, soit un autre message.

En variante du premier mode de réalisation, illustré en figures 1 à 4, la source de lumière comporte deux diodes électroluminescentes émettant dans le même spectre visible.

En variante du premier mode de réalisation, illustré en figures 1 à 4, le substrat 110 est plus épais sur le coté de l'injection des rayons émis par la source de lumière 141.

Ainsi, grâce à ces dispositions, la propagation et la distribution de la lumière de la source injectée dans le substrat peuvent se trouver variées par rapport à un substrat à épaisseur unique.

Par la modulation d'une caractéristique physique de la lumière émise par les sources de lumière, ici l'allumage ou l'extinction d'une des sources de lumière, on fait apparaître, sur la surface du dispositif d'éclairage 100, soit un message, soit un autre message.

En variante du premier mode de réalisation, illustré en figures 1 à 4, le filtre « négatif » 120 possède des courbes de transmission 114, portant des zones transparentes de la même forme que celle de la zone « message » 111.

En variante du premier mode de réalisation, illustré en figures 1 à 4, le filtre « négatif » 120 possède des courbes de transmission 113, portant des zones transparentes constituées d'une forme identique à celle de la zone « message » 111 et d'une forme complémentaire à celle de la zone « message » 161.

Ainsi, grâce à ces dispositions, le filtre « négatif » peut être de très petite taille.

Les filtres « négatifs» 120 et 170 possèdent respectivement des courbes de transmission 113 et 162, portant respectivement des zones transparentes de la même forme que celles des zones « message » 111 et 161, par exemple « O » et « 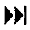 », et se trouvant respectivement après les substrats 110 et 160.

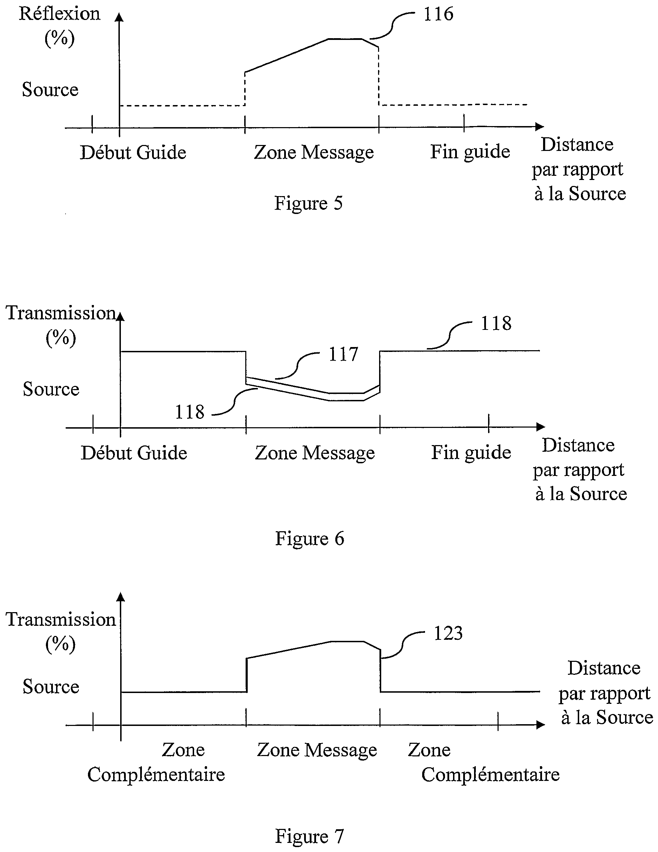

En variante du premier mode de réalisation, illustré en figures 1 à 4, la zone « message » 111 possède une réflexion 116 non uniforme et à tendance croissante en fonction de la distance par rapport à la source de lumière, tel que montré par la figure 5.

En variante du premier mode de réalisation, illustré en figures 1 à 6, la zone « message » 161 a une transmission non uniforme et à tendance croissante en fonction de la distance par rapport à la source de lumière.

Ainsi, grâce à ces dispositions, le guide d'onde corrige le problème d'une distribution décroissante des rayons de lumière en fonction de la distance par rapport à la source, et réfléchit ou transmet le « message » à la surface d'affichage avec une luminosité uniforme ou presque uniforme.

En variante du premier mode de réalisation, illustré en figures 1 à 4, le filtre « négatif » 120 possède des courbes de transmission 123, étant le complément de la courbe de transmission du guide d'onde 118, composé de la courbe de transmission 117 à l'intérieur de la zone « message » 111 et la transmission du substrat à l'extérieur de la zone « message », tel que montré par les figures 6 et 7.

Ainsi, grâce à ces dispositions, un afficheur « latéral » peut proposer une zone « message » à réflexion non uniforme et un filtre « négatif » complémentaire, et peut ainsi distribuer uniformément de la lumière issue latéralement de la source de lumière sur la surface d'affichage du dispositif et atténuer uniformément de la lumière issue des autres afficheurs placées en arrière.

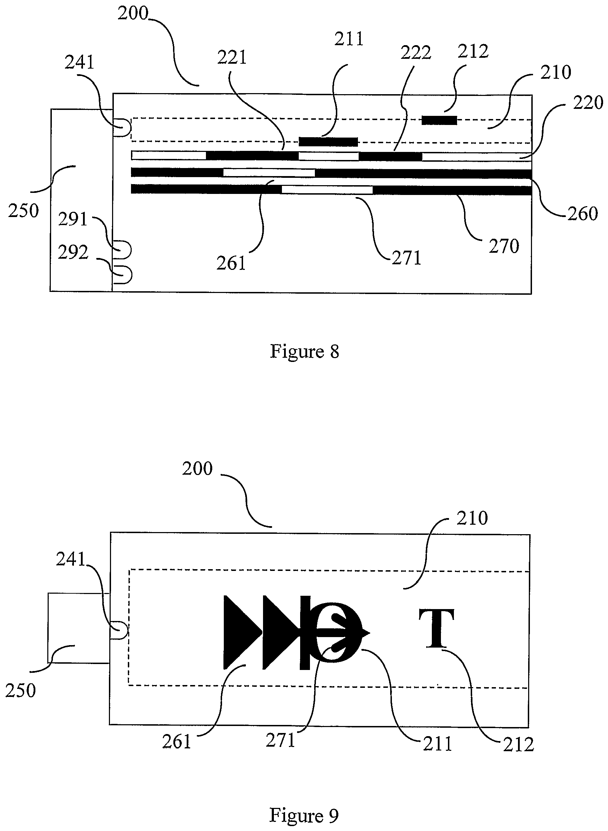

Dans le deuxième mode de réalisation, illustré par les figures 8 à 10, on utilise des filtres chromatiques pour former, en positif ou en négatif, différents messages et, pour faire apparaître un message donné, on module la caractéristique d'une des sources de lumière.

On observe, en figures 8 à 9, un dispositif d'affichage 200 comportant un afficheur « latéral » et un afficheur « rétro ». L'afficheur « latéral » est composé d'un substrat transparent ou translucide 210, muni de deux zones « message » 211 et 212, d'un filtre « négatif » 220 se trouvant après le substrat 210 et d'une source de lumière constituée d'une diode électroluminescente 241 commandée par un moyen de modulation 250. L'afficheur « rétro » est composé de deux filtres 260 et 270 et d'une source de lumière constituée de deux diodes électroluminescentes 291 et 292 commandées par le moyen de modulation 250.

Le substrat transparent 210 possède un indice supérieur à celui de l'air, de telle manière que la lumière injectée latéralement dans un substrat se propage à l'intérieur du même substrat.

La diode électroluminescente 241, placée à coté du substrat 210, émet des rayons lumineux blancs. Les diodes électroluminescentes 291 et 292, placées sous les filtres 260 et 270, émettent dans des bandes spectrales différentes, préférentiellement disjointes. Par exemple, la diode électroluminescente 291 émet des rayons lumineux 293 dont les longueurs se trouvent entre 400 et 550 nanomètres et la diode électroluminescente 292 émet des rayons lumineux 294 dont les longueurs se trouvent entre 600 et 700 nanomètres, tel que montré par la figure 9.

Les zones « message » 211 et 212 se trouvent respectivement sur le dos et la face du substrat 210 et sur le chemin optique des rayons lumineux issus des diodes électroluminescentes 241. Les zones 211 et 212 sont formées de messages, par exemple « O » et « T ». La zone 211 possède la courbe de réflexion 112 et la courbe de transmission 113, la zone 212 possède la courbe de transmission 113, tel que montré par la figure 3 et 4. Les zones « message » 211 et 212 respectivement reflètent et transmettent les rayons lumineux ayant des longueurs d'onde entre 400 et 700 nanomètres, émises par la diode électroluminescente 241.

Le filtre «négatif» 220 possède la courbe de transmission 113, portant des zones transparentes couvrant les formes des zones « message » 211 et 212, par exemple « O » et « T », et se trouve après le substrat 210.

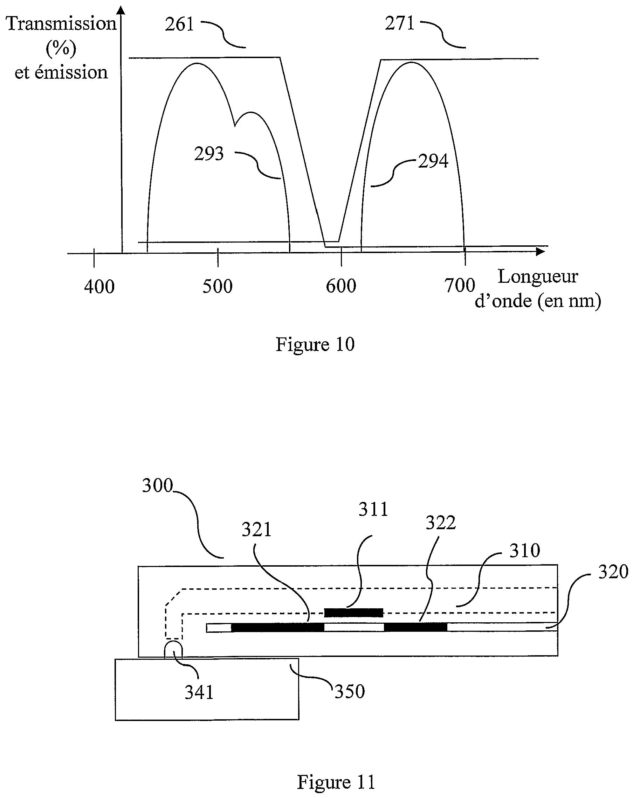

Les filtres 260 et 270 sont superposés, c'est-à-dire qu'ils se trouvent successivement placés sur le chemin optique des rayons lumineux issus des diodes électroluminescentes 291 et 292. Sur les filtres 260 et 270 sont formés des messages différents, par exemple « 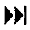 » et « → ». Les filtres 260 et 270 sont respectivement transparents dans la forme de ces messages et en dehors des formes des messages, possédant des spectres d'absorption 261 et 271 correspondant respectivement sensiblement aux spectres d'émission des diodes électroluminescentes 291 et 292, comme indiqué en regard de la figure 10.

Lorsque le moyen de modulation 250 ne commande aucune diode électroluminescente, aucun message n'est éclairé.

Lorsque le moyen de modulation 250 commande l'allumage de la diode électroluminescente 241 et l'extinction des diodes électroluminescentes 291 et 292, la diode envoie des rayons lumineux de longueurs d'onde entre 400 et 700 nanomètres dans le substrat 210 jusqu'aux zones « message » 211 et 212. Les zones «message» 211 et 212, respectivement par réflexion et transmission, renvoient une partie des rayons en direction perpendiculaire et en dehors du substrat. Les rayons renvoyés forment un message sous une certaine forme, ici « O » et « T », en couleur, blanc, par exemple.

Lorsque le moyen de modulation 250 commande l'allumage de la diode électroluminescente 291 et l'extinction des diodes électroluminescentes 292 et 241, la source de lumière émet des rayons lumineux 293 dont les longueurs d'onde se trouvent entre 400 et 550 nanomètres. Les rayons lumineux émis par la source de lumière traversent le filtre 270 dans le message porté par ce filtre et sont absorbés en dehors du message puisque son spectre d'absorption 271 correspond au spectre d'émission 293 de la diode électroluminescente 291. Puis, les rayons restants subissent une atténuation sensiblement uniforme en traversant le substrat 210 et le filtre « négatif » 220, arrivant sur la surface d'affichage, et forment un message sous une certaine forme, ici « → », en couleur, bleu, par exemple.

Lorsque le moyen de modulation 250 commande l'allumage de la diode électroluminescente 292 et l'extinction des diodes électroluminescentes 291 et 241, la source de lumière émet des rayons lumineux 294 dont les longueurs d'onde se trouvent entre 600 et 700 nanomètres. Les rayons lumineux émis par la source de lumière traversent le filtre 270 aussi bien en dehors du message représenté par ce filtre que dans ce message puisqu'il est transparent aux rayons du spectre d'émission 294 de la diode électroluminescente 292. Puis, les rayons traversent le filtre 260 dans la forme du message porté par le filtre et sont absorbés en dehors de la forme de ce message puisque le spectre d'absorption du filtre 261 correspond au spectre d'émission 294 de la diode électroluminescente 292. Les rayons restants subissent une atténuation sensiblement uniforme en traversant le substrat 210 et le filtre « négatif » 220, arrivent sur la surface d'affichage et forment un message sous une certaine forme, ici « 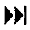 », en couleur, rouge, par exemple.

Ainsi, grâce à ces dispositions, par la modulation d'une caractéristique physique de la lumière émise par les sources de lumière, ici l'allumage ou l'extinction d'une des sources de lumière, on fait apparaître, sur la surface du dispositif d'affichage 200, soit un message, soit un autre message.

En variante du deuxième mode de réalisation, illustré en figures 8 à 10, la zone « message » 212 possède une courbe de transmission différente de celle de la zone « message » 211.

En variante du deuxième mode de réalisation, illustré en figures 8 à 10, sur les filtres 260 et 270 sont formés respectivement des messages sous la forme d'une zone rectangulaire et une zone elliptique, chacune couvrant entièrement les zones « message » 211 et 212. Les filtres 260 et 270 étant respectivement transparents dans la forme de ces messages, et en dehors des formes des messages, possédant des spectres d'absorption 261 et 271 correspondant respectivement sensiblement aux spectres d'émission des diodes électroluminescentes 291 et 292, comme indiqué en regard de la figure 10.

Lorsque le moyen de modulation 250 commande l'allumage des diodes électroluminescentes 241 et 291 et l'extinction de la diode électroluminescente 292, les rayons renvoyés par la diode 241 forment un message sous une certaine forme, ici « O » et « T », en couleur, blanc, par exemple ; les rayons renvoyés par la diode 291 forment une zone elliptique uniforme située après le message « O » et « T », en couleur, bleu, par exemple.

Lorsque le moyen de modulation 250 commande l'allumage des diodes électroluminescentes 241 et 292 et l'extinction de la diode électroluminescente 291, les rayons renvoyés par la diode 241 forment un message sous une certaine forme, ici « O » et « T », en couleur, blanc, par exemple ; les rayons renvoyés par la diode 291 forment une zone rectangulaire uniforme située après le message « O » et « T », en couleur, rouge, par exemple.

Ainsi, grâce à ces dispositions, par la modulation d'une caractéristique physique de la lumière émise par les sources de lumière, ici l'allumage de la source de l'afficheur « latéral » et l'allumage ou l'extinction d'une des sources de lumière de l'afficheur « rétro », on fait apparaître, sur la surface du dispositif d'affichage 200, soit un message sur un fond, soit un message sur un autre fond.

En variante du deuxième mode de réalisation, illustré en figures 11, le dispositif 300 comportant un afficheur « latéral », dont le substrat 310 en forme de « L » est constitué d'une plaque munie d'une zone « message » 311 et une tête d'injection perpendiculaire à la plaque ; une source de lumière constituée d'une diode électroluminescente 341.

Lorsque le moyen de modulation 350 commande l'allumage de la diode électroluminescente 341, la diode envoie des rayons lumineux dans un premier temps dans la tête d'injection. Ces rayons lumineux sont ensuite guidés jusqu'à la zone « message » 341. Les rayons réfléchis par la zone « message » forment un message sur la surface du dispositif d'affichage.

Ainsi, grâce à ces dispositions, la source de lumière d'un afficheur « latéral » peut être constituée d'au moins d'une diode électroluminescente située perpendiculaire au substrat portant des zones « message ».

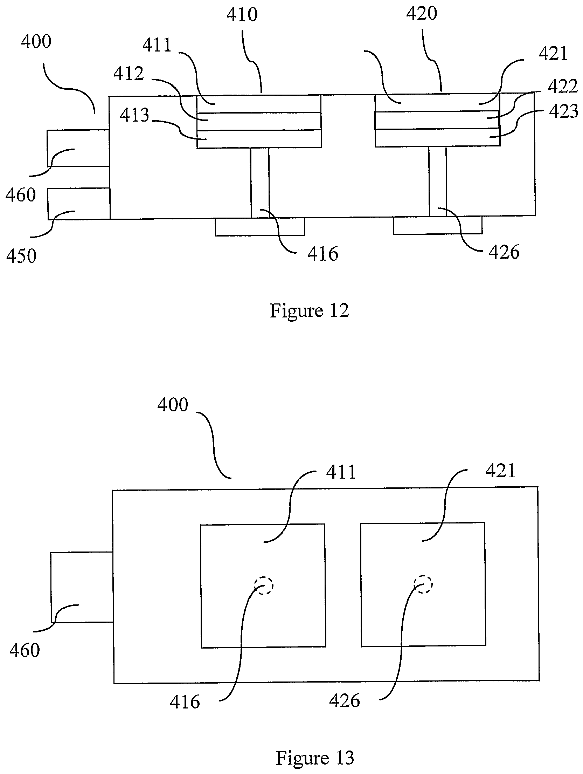

Dans le troisième mode de réalisation, illustré par les figures 12 et 13, nous mettons en œuvre un clavier de la pressente invention.

On observe, en figures 12 et 13, un clavier 400 comportant des touches 410 et 420, dont chacune munie de trois afficheurs respectivement 411, 412, 413 et 421, 422, 423, les afficheurs 411, 412, 421, 422 étant des afficheurs « latéraux », et les afficheurs 413, 423 étant des afficheurs « rétro », des contacteurs électriques, respectivement 416 et 426, un moyen de modulation 450 et un moyen de réception de signaux 460.

Lorsque le moyen de modulation 450 module une caractéristique d'une source de lumière afin d'afficher un message sur la surface des touches 410 et 420, et lorsque l'utilisateur presse ou appuie sur les touches 410 et 420, les contacteurs électriques respectivement 416 et 426 effectuent un contact électrique entre leurs bornes et envoient un signal représentatif de la touche de clavier activée par l'utilisateur au moyen de réception de signaux 460, le moyen de réception étant adapté à affecter aux dits signaux le message affiché par la touche activée par l'utilisateur.

Ainsi, grâce à la mise en oeuvre de la présente invention, par la modulation d'une caractéristique physique de la lumière émise par des sources de lumière, on fait apparaître, sur chaque touche du clavier 100, soit un message, soit un autre, et un moyen de réception affecte un signal correspondant au message et à l'activation de la touche par l'utilisateur.

## Revendications

1. Dispositif d'affichage (100) qui comporte une surface d'affichage et au moins :
- un afficheur « latéral», placé après la surface d'affichage du dispositif d'affichage (100), apte à afficher un message,
- un autre afficheur disposé à l'arrière de l'afficheur « latéral » de sorte que le premier afficheur « latéral » et l'afficheur sont empilés ;
- l'afficheur « latéral» comporte :
- Un premier guide d'onde composé d'un premier substrat (110) transparent ou translucide, portant un premier message à afficher composé d'au moins une première zone « message » (111) placée sur une des surfaces du premier substrat (110) ;
- au moins une source de lumière (141) adaptée à éclairer latéralement le premier guide d'onde et à émettre des rayons lumineux selon une première bande spectrale, la première zone «message» (111) reflétant les rayons lumineux émis par la première source de lumière (141) ;
- ledit autre afficheur comporte :
- Un deuxième guide d'onde composé d'un deuxième substrat (160) transparent ou translucide, portant un deuxième message à afficher composé d'au moins une deuxième zone « message » (161) ;
- au moins une deuxième source de lumière (191) apte à émettre des rayons lumineux selon une deuxième bande spectrale, la deuxième zone « message » (161) transmettant les rayons lumineux émis par la deuxième source de lumière (191) et la première zone « message » (111) étant configurée pour transmettre les rayons lumineux émis par la deuxième source de lumière (191) ;
- l'afficheur « latéral» comporte également :
- au moins un filtre «négatif» (120), placé après le premier guide d'onde, couvrant au moins partiellement la première zone « message » (111) et portant des zones transparentes constituées d'une forme identique à celle de la première zone «message» (111) et des zones « complémentaires » (121, 122), ces zones « complémentaires » (121, 122) étant complémentaires en ce que elles présentent un pourtour interne qui correspond à un pourtour externe des zones transparentes, le filtre «négatif» (120) étant configuré pour que des rayons lumineux émis par la deuxième source de lumière (191) et traversant ledit filtre « négatif » (120) et ledit substrat (110) soient uniformément atténués dans la première zone « message » (111) et uniformément atténués dans les zones « complémentaires » (121, 122) ;
- un moyen de modulation (150) d'au moins une caractéristique physique prise parmi : l'allumage ou l'extinction des sources de lumière (141, 191) ;
le dispositif d'affichage étant configuré pour que :
- lorsque le moyen de modulation (150) commande l'allumage de la première source de lumière (141) et l'extinction de la deuxième source de lumière (191), la première source de lumière (141) envoie des rayons lumineux selon la première bande spectrale dans le premier substrat (110) jusqu'à la première zone « message » (111), la première zone « message » (111) renvoyant une partie des rayons lumineux en direction perpendiculaire et en dehors du premier substrat (110) vers la surface d'affichage du dispositif d'affichage, les rayons lumineux renvoyés formant le premier message,
- lorsque le moyen de modulation (150) commande l'allumage de la deuxième source de lumière (191) et l'extinction de la première source de lumière (141), la deuxième source de lumière (191) envoie des rayons lumineux selon la deuxième bande spectrale dans le deuxième substrat (160) jusqu'à la deuxième zone « message » (161), la deuxième zone « message » (161) renvoyant une partie des rayons lumineux dans la direction perpendiculaire et en dehors du deuxième substrat (160), les rayons lumineux renvoyés subissant une atténuation sensiblement uniforme en traversant le premier substrat (110) et le filtre « négatif » (120), et arrivant sur la surface d'affichage en formant le deuxième message.

2. Dispositif d'affichage selon la revendication 1 dans lequel la première bande spectrale est comprise entre 400nm et 700nm et dans lequel la deuxième bande spectrale est comprise entre 600nm et 700nm.

3. Dispositif d'affichage selon la revendication 1 dans lequel les rayons lumineux émis par la première source de lumière sont de couleur blanche.

4. Dispositif d'affichage selon l'une quelconque des revendications précédentes dans lequel la première source de lumière comporte une diode électroluminescente et dans lequel la deuxième source de lumière comporte une diode électroluminescente.

5. Dispositif d'affichage selon l'une quelconque des revendications précédentes, **caractérisé en ce que** le filtre « négatif » d'un afficheur « latéral » se trouve sur le substrat de l'afficheur situé directement après ledit afficheur « latéral ».

6. Dispositif d'affichage selon l'une quelconque des revendications précédentes, **caractérisé en ce que** l'afficheur « latéral » comporte au moins un filtre « masque » à fonction transmissive, placé sur la surface du guide d'onde, superposé sur les zones « messages », afin de rendre lesdites zones « message » moins visibles ou complètement invisibles sous la lumière ambiante lorsque aucune source de lumière n'est allumée, et **en ce que** les zones « message », les filtres « négatifs » et les filtres « masque » du dispositif sont constitués d'au moins une encre déposée sur au moins un substrat.

7. Dispositif d'affichage selon l'une quelconque des revendications précédentes, **caractérisé en ce que** l'afficheur « latéral » comporte au moins un filtre « masque » à fonction transmissive, placé sur la surface du guide d'onde, superposé sur les zones « messages », afin de rendre lesdites zones « message » moins visibles ou complètement invisibles sous la lumière ambiante lorsque aucune source de lumière n'est allumée, et **en ce que** les zones « message », les filtres « négatifs » et les filtres « masque » sont réalisés par des formes géographiques sur le substrat.

8. Procédé d'affichage d'un dispositif d'affichage (100) selon l'une quelconque des revendications précédentes, le procédé d'affichage comportant :
- une étape d'allumage de la deuxième source de lumière (191) éclairant latéralement le deuxième substrat (160) comportant la deuxième zone « message » (161) ;
- une étape de formation du deuxième message sur la surface dudit autre afficheur par des rayons transmis de la deuxième zone « message » portées par le deuxième substrat ;
- une étape de transmission du deuxième message partant de la surface dudit autre afficheur, traversant l'afficheur « latéral » jusqu'à la surface d'affichage du dispositif d'affichage ;
- une étape de modulation par le moyen de modulation (150) d'au moins une caractéristique physique d'une parmi la première (141) et la deuxième (191) source de lumière, de telle manière que la variation de l'au moins une caractéristique physique modulée par le moyen de modulation (150) fasse apparaître le premier message sur la surface d'affichage du dispositif d'affichage.

## Patentansprüche

1. Anzeigevorrichtung (100), die eine Anzeigefläche und mindestens:
- eine nach der Anzeigefläche der Anzeigevorrichtung (100) platzierte, "seitliche" Anzeige, die in der Lage ist, eine Nachricht anzuzeigen,
- eine weitere Anzeige umfasst, die hinter der "seitlichen" Anzeige angeordnet ist, sodass die erste "seitliche" Anzeige und die Anzeige gestapelt sind;
- die "seitliche" Anzeige umfasst:
-- einen aus einem ersten transparenten oder transluzenten Substrat (110) bestehenden ersten Wellenleiter, der eine erste anzuzeigende Nachricht trägt, die aus mindestens einem ersten "Nachrichtenbereich" (111) besteht, welcher auf einer der Flächen des ersten Substrats (110) platziert ist;
-- mindestens eine Lichtquelle (141), die geeignet ist, den ersten Wellenleiter seitlich zu beleuchten und Lichtstrahlen in einem ersten Spektralband zu emittieren, wobei der erste "Nachrichtenbereich" (111) die von der ersten Lichtquelle (141) emittierten Lichtstrahlen reflektiert;
- die weitere Anzeige umfasst:
-- einen aus einem zweiten transparenten oder transluzenten Substrat (160) bestehenden zweiten Wellenleiter, der eine zweite anzuzeigende Nachricht trägt, die aus mindestens einem zweiten "Nachrichtenbereich" (161) besteht;
-- mindestens eine zweite Lichtquelle (191), die in der Lage ist, Lichtstrahlen in einem zweiten Spektralband zu emittieren, wobei der zweite "Nachrichtenbereich" (161) die von der zweiten Lichtquelle (191) emittierten Lichtstrahlen durchlässt und der erste "Nachrichtenbereich" (111) so ausgelegt ist, dass er die von der zweiten Lichtquelle (191) emittierten Lichtstrahlen durchlässt;
- die "seitliche" Anzeige umfasst ebenfalls:
-- mindestens einen nach dem ersten Wellenleiter platzierten "Negativfilter" (120), der den ersten "Nachrichtenbereich" (111) mindestens teilweise bedeckt und transparente Bereiche, die aus einer mit der des ersten "Nachrichtenbereichs" (111) identischen Form bestehen, und "komplementäre" Bereiche (121, 122) trägt, wobei diese "komplementären" Bereiche (121, 122) dadurch komplementär sind, dass sie einen Innenumfang aufweisen, der einem Außenumfang der transparenten Bereiche entspricht, wobei der "Negativfilter" (120) so ausgelegt ist, dass von der zweiten Lichtquelle (191) emittierte und durch den "Negativfilter" (120) und das Substrat (110) hindurchgehende Lichtstrahlen im ersten "Nachrichtenbereich" (111) gleichmäßig abgeschwächt werden und in den "komplementären" Bereichen (121, 122) gleichmäßig abgeschwächt werden;
- ein Mittel zum Modulieren (150) mindestens einer physikalischen Eigenschaft, ausgewählt aus: dem Einschalten oder dem Ausschalten der Lichtquellen (141, 191);
wobei die Anzeigevorrichtung so ausgelegt ist, dass:
- wenn das Modulationsmittel (150) das Einschalten der ersten Lichtquelle (141) und das Ausschalten der zweiten Lichtquelle (191) steuert, die erste Lichtquelle (141) Lichtstrahlen im ersten Spektralband bis zum ersten "Nachrichtenbereich" (111) in das erste Substrat (110) sendet, wobei der erste "Nachrichtenbereich" (111) einen Teil der Lichtstrahlen in senkrechter Richtung und aus dem ersten Substrat (110) heraus zur Anzeigefläche der Anzeigevorrichtung ablenkt, wobei die abgelenkten Lichtstrahlen die erste Nachricht bilden,
- wenn das Modulationsmittel (150) das Einschalten der zweiten Lichtquelle (191) und das Ausschalten der ersten Lichtquelle (141) steuert, die zweite Lichtquelle (191) Lichtstrahlen im zweiten Spektralband bis zum zweiten "Nachrichtenbereich" (161) in das zweite Substrat (160) sendet, wobei der zweite "Nachrichtenbereich" (161) einen Teil der Lichtstrahlen in die senkrechte Richtung und aus dem zweiten Substrat (160) heraus ablenkt, wobei die abgelenkten Lichtstrahlen beim Durchgang durch das erste Substrat (110) und den "Negativfilter (120) eine im Wesentlichen gleichmäßige Abschwächung erfahren und auf der Anzeigefläche auftreffen, wobei sie die zweite Nachricht bilden.

2. Anzeigevorrichtung nach Anspruch 1, wobei das erste Spektralband zwischen 400 nm und 700 nm liegt, und wobei das zweite Spektralband zwischen 600 nm und 700 nm liegt.

3. Anzeigevorrichtung nach Anspruch 1, wobei die von der ersten Lichtquelle emittierten Lichtstrahlen weiße Farbe besitzen.

4. Anzeigevorrichtung nach einem der vorstehenden Ansprüche, wobei die erste Lichtquelle eine Leuchtdiode umfasst, und wobei die zweite Lichtquelle eine Leuchtdiode umfasst.

5. Anzeigevorrichtung nach einem der vorstehenden Ansprüche, **dadurch gekennzeichnet, dass** sich der "Negativfilter" einer "seitlichen Anzeige" auf dem Substrat der Anzeige befindet, die direkt nach der "seitlichen" Anzeige liegt.

6. Anzeigevorrichtung nach einem der vorstehenden Ansprüche, **dadurch gekennzeichnet, dass** die "seitliche" Anzeige mindestens einen "Maskenfilter" mit durchlässiger Funktion umfasst, der den "Nachrichtenbereichen" überlagert auf der Fläche des Wellenleiters platziert ist, um die "Nachrichtenbereiche" unter Umgebungslicht, wenn keine Lichtquelle eingeschaltet ist, weniger sichtbar oder vollständig unsichtbar zu machen, und dadurch, dass die "Nachrichtenbereiche", die "Negativfilter" und die "Maskenfilter" der Vorrichtung aus mindestens einer Tinte bestehen, die auf mindestens einem Substrat abgeschieden ist.

7. Anzeigevorrichtung nach einem der vorstehenden Ansprüche, **dadurch gekennzeichnet, dass** die "seitliche" Anzeige mindestens einen "Maskenfilter" mit durchlässiger Funktion umfasst, der den "Nachrichtenbereichen" überlagert auf der Fläche des Wellenleiters platziert ist, um die "Nachrichtenbereiche" unter Umgebungslicht, wenn keine Lichtquelle eingeschaltet ist, weniger sichtbar oder vollständig unsichtbar zu machen, und dadurch, dass die "Nachrichtenbereiche", die "Negativfilter" und die "Maskenfilter" durch geografische Formen auf dem Substrat ausgeführt sind.

8. Anzeigeverfahren einer Anzeigevorrichtung (100) nach einem der vorstehenden Ansprüche, wobei das Anzeigeverfahren umfasst:
- einen Schritt des Einschaltens der zweiten Lichtquelle (191), die das zweite Substrat (160), das den zweiten "Nachrichtenbereich" (161) umfasst, seitlich beleuchtet;
- einen Schritt des Bildens der zweiten Nachricht auf der Fläche der weiteren Anzeige durch Strahlen, die vom zweiten "Nachrichtenbereich", den das zweite Substrat trägt, durchgelassen werden;
- einen Schritt des Durchlassens der zweiten Nachricht ab der Fläche der weiteren Anzeige durch die "seitliche" Anzeige hindurchgehend bis zur Anzeigefläche der Anzeigevorrichtung;
- einen Schritt des Modulierens, durch das Modulationsmittel (150), mindestens einer physikalischen Eigenschaft einer aus der ersten (141) und der zweiten (191) Lichtquelle so, dass die Veränderung der mindestens einen durch das Modulationsmittel (150) modulierten physikalischen Eigenschaft die erste Nachricht auf der Anzeigefläche der Anzeigevorrichtung erscheinen lässt.

## Claims

1. Display device (100) that includes a display surface and at least:
- a "side" display, located behind the display surface of the display device (100), capable of displaying a message,
- another display disposed at the rear of the "side" display in such a way that the first "side" display and the display are stacked;
- the "side" display includes:
- A first waveguide comprised of a first transparent or translucent substrate (110), carrying a first message to be displayed comprised of at least one first "message" area (111) placed on one of the surfaces of the first substrate (110);
- at least one light source (141) suitable for side-lighting the first waveguide and for emitting light rays according to a first spectral band, the first "message" area (111) reflecting the light rays emitted by the first light source (141);
- said other display includes:
- A second waveguide comprised of a second transparent or translucent substrate (160), carrying a second message to be displayed comprised of at least one second "message" area (161);
- at least one second light source (191) capable of emitting light rays according to a second spectral band, the second "message" area (161) transmitting the light rays emitted by the second light source (191) and the first "message" area (111) being configured to transmit the light rays emitted by the second light source (191);
- the "side" display also includes:
- at least one "negative" filter (120), located behind the first waveguide, at least partially covering the first "message" area (111) and carrying transparent areas comprised of a shape identical to that of the first "message" area (111) and "complementary" areas (121, 122), these "complementary" areas (121, 122) being complementary in that they have an internal periphery that corresponds to an external periphery of the transparent areas, the "negative" filter (120) being configured so that light rays emitted by the second light source (191) and passing through said "negative" filter (120) and said substrate (110) are uniformly attenuated in the first "message" area (111) and uniformly attenuated in the "complementary" areas (121, 122);
- a means for modulating (150) at least one physical characteristic taken from: the illumination or the extinction of the light sources (141,191);
the display device being configured so that:
- when the means for modulating (150) controls the illumination of the first light source (141) and the extinction of the second light source (191), the first light source (141) sends light rays according to the first spectral band in the first substrate (110) to the first "message" area (111), the first "message" area (111) reflecting a portion of the light rays in a perpendicular direction and outside of the first substrate (110) to the display surface of the display device, the reflected light rays forming the first message,
- when the means for modulating (150) controls the illumination of the second light source (191) and the extinction of the first light source (141), the second light source (191) sends light rays according to the second spectral band in the second substrate (160) to the second "message" area (161), the second "message" area (161) reflecting a portion of the light rays in the perpendicular direction and outside of the second substrate (160), the reflected light rays undergoing a substantially uniform attenuation by passing through the first substrate (110) and the "negative" filter (120), and arriving on the display surface by forming the second message.

2. Display device according to claim 1 wherein the first spectral band is comprised between 400nm and 700nm and wherein the second spectral band is comprised between 600nm and 700nm.

3. Display device according to claim 1 wherein the light rays emitted by the first light source are of a white colour.

4. Display device according to any preceding claim wherein the first light source includes a light-emitting diode and wherein the second light source includes a light-emitting diode.

5. Display device according to any preceding claim, **characterised in that** the "negative" filter of a "side" display is on the substrate of the display located directly behind said "side" display.

6. Display device according to any preceding claim, **characterised in that** the "side" display includes at least one "mask" filter with a transmissive function, located on the surface of the waveguide, superimposed on the "message" areas, so as to render said "message" areas less visible or completely invisible under the ambient light when no light source is illuminated, and **in that** the "message" areas, the "negative" filters and the "mask" filters of the device are comprised of at least one ink deposited on at least one substrate.

7. Display device according to any preceding claim, **characterised in that** the "side" display includes at least one "mask" filter with a transmissive function, located on the surface of the waveguide, superimposed on the "message" areas, so as to render said "message" areas less visible or completely invisible under the ambient light when no light source is illuminated, and **in that** the "message" areas, the "negative" filters and the "mask" filters are carried out by geographical shapes on the substrate.

8. Display method of a display device (100) according to any preceding claim, the display method including:
- a step of illuminating the second light source (191) side-lighting the second substrate (160) including the second "message" area (161);
- a step of forming the second message on the surface of said other display by rays transmitted from the second "message" area carried by the second substrate;
- a step of transmitting the second message starting from the surface of said other display, passing through the "side" display to the display surface of the display device;
- a step of modulating by the means for modulating (150) at least one physical characteristic of one among the first (141) and the second (191) light source, in such a way that the variation of the least one physical characteristic modulated by the means for modulating (150) causes the first message to appear on the display surface of the display device.
